# DEMANDE DE BREVET EUROPEEN

(11) **EP 1 804 073 A1**
(43) Date de publication de la demande: **04.07.2007**
(21) Numéro de dépôt: 06301260.3
(22) Date de dépôt: 15.12.2006
(51) Int. Cl.: G01S 5/02, G01S 5/00

(54) **Système et procédé de localisation d'un personnel en temps réel**

(30) Priorité: 29.12.2005 FR 0554129
(71) Demandeur: Alcatel Lucent, 75008 Paris (FR)
(72) Inventeur: Monnerat, Michel, 31240 L'Union (FR)
(74) Mandataire: Sciaux, Edmond

(57) **Abrégé**

L'invention concerne un système de localisation de personnel à l'intérieur d'un lieu d'intervention, ledit système comprenant au moins trois véhicules d'intervention et au moins trois ensembles comprenant une station radio de base de type BTS et un récepteur RNSS connecté à ladite station, un ensemble étant solidarisé à respectivement un véhicule de sorte à assurer la synchronisation et la localisation de chacune des stations de base pour émettre un signal de position synchronisée, ledit système comprenant en outre un dispositif de communication portable par le personnel, ledit dispositif et chacune desdites stations étant aptes à communiquer entre eux de sorte à émettre un signal de distance, ledit système comprenant un serveur de localisation qui est agencé pour recevoir les signaux de position et de distance, ledit serveur étant apte à assurer en temps réel la localisation dudit dispositif par triangulation au moyen desdits signaux reçus.

## Description

L'invention concerne un système de localisation de personnel à l'intérieur d'un lieu d'intervention, un procédé de localisation ainsi qu'un véhicule d'intervention pour un tel système.

L'invention s'applique typiquement à la localisation d'au moins un pompier sur son lieu d'intervention, notamment à l'intérieur d'un bâtiment.

Pour des raisons de sécurité, mais également d'efficacité d'intervention, il est souhaitable de pouvoir localiser en temps réel un pompier à l'intérieur du bâtiment dans lequel il intervient. En particulier, la localisation peut être utilisée par le pompier lui-même dans ses déplacements, mais également par le poste de contrôle de l'intervention de sorte à diriger les pompiers en opération relativement les uns par rapport aux autres.

Toutefois, à l'intérieur d'un bâtiment, une localisation de type GPS (pour Global Positioning System) n'est pas disponible du fait de l'environnement confiné qui empêche la communication avec les satellites.

Pour leur permettre de se positionner, les pompiers ont à leur disposition des systèmes acoustiques portables qui leur permettent de se positionner les uns par rapport aux autres. Toutefois, en fonction des conditions d'opération, notamment du bruit ambiant, la fiabilité de cette solution n'est pas assurée.

En outre, cette solution ne permet pas de localiser un personnel dans un référentiel connu, mais uniquement par rapport au personnel environnant, et ne permet donc pas de fournir la localisation au poste de contrôle ni de localiser le pompier relativement à l'architecture du lieu d'intervention.

Par ailleurs, l'utilisation des éventuels réseaux disponibles sur le lieu d'intervention, outre leur caractère hypothétique, n'est pas fiable du fait de leur probabilité importante d'être endommagés par le sinistre à combattre.

Par conséquent, il existe également un problème de fiabilisation de la possibilité de communiquer entre les personnels intervenants, ou entre un personnel et l'extérieur du lieu d'intervention.

L'invention a pour but de pallier ces inconvénients en proposant notamment un système autonome et un procédé qui permettent de localiser précisément un pompier sur son lieu d'intervention et ce, avec une fiabilité indépendante des conditions d'intervention. En outre l'invention permet de fiabiliser la possibilité de communiquer du personnel dans ou depuis le lieu d'intervention.

A cet effet, et selon un premier aspect, l'invention propose un système de localisation de personnel à l'intérieur d'un lieu d'intervention, ledit système comprenant au moins trois véhicules d'intervention et au moins trois ensembles comprenant une station radio de base de type BTS et un récepteur RNSS connecté à ladite station, un ensemble étant solidarisé à respectivement un véhicule de sorte à assurer la synchronisation et la localisation de chacune des stations de base au moyen du récepteur, chacune desdites stations étant aptes à émettre un signal de position synchronisée, ledit système comprenant en outre un dispositif de communication portable par le personnel, ledit dispositif et chacune desdites stations étant aptes à communiquer entre eux de sorte à émettre un signal de distance respectivement entre le dispositif de communication et chacune des stations de base, ledit système comprenant un serveur de localisation qui est agencé pour recevoir les signaux de position et de distance, ledit serveur étant apte à assurer en temps réel la localisation dudit dispositif par triangulation au moyen desdits signaux reçus.

Selon un deuxième aspect, l'invention propose un procédé de localisation de personnel à l'intérieur d'un lieu d'intervention, ledit procédé prévoyant d'équiper au moins trois véhicules d'intervention avec un ensemble comprenant une station radio de base de type BTS et un récepteur RNSS connecté à ladite station, lesdits véhicules étant positionnés à proximité du lieu d'intervention, dans lequel, en temps réel :
- chaque station de base est localisée et synchronisée au moyen du récepteur qui lui est connecté ;
- un signal de position synchronisée de chacune des stations radio de base est émis vers un serveur de localisation ;
- des signaux de distance séparant un dispositif de communication porté par le personnel et respectivement chacune des stations de base sont mesurés et émis vers le serveur de localisation ;
- le serveur calcule la localisation du personnel par triangulation au moyen des signaux de position synchronisée et des signaux de distance.

Selon un troisième aspect, l'invention propose un véhicule d'intervention pour un système de localisation tel que prévu ci-dessus, ledit véhicule étant équipé avec un ensemble comprenant une station radio de base du type BTS et un récepteur RNSS connecté à ladite station de sorte à assurer sa localisation et sa synchronisation en temps réel.

D'autres particularités et avantages de l'invention apparaîtront dans la description qui suit de différents modes de réalisation particuliers.

On décrit ci-dessous un système de localisation de personnel à l'intérieur d'un lieu d'intervention. En particulier le personnel est un pompier qui intervient à l'intérieur d'un bâtiment pour circonscrire un feu. Le système permet également de localiser plusieurs personnels simultanément ou relativement les uns par rapport aux autres.

Dans cette réalisation particulière, mais également dans d'autres applications envisageables, il est important que le pompier puisse se localiser par rapport à un référentiel connu, notamment par rapport à l'architecture du bâtiment. Pour des raisons de sécurité et d'efficacité, il est également utile de pouvoir localiser, les uns par rapport aux autres, plusieurs personnels présents dans le bâtiment et ce, tant au niveau d'un personnel donné qu'au niveau d'un poste de contrôle des opérations.

Le système de localisation décrit ci-dessous permet de répondre à l'ensemble de ces exigences de façon fiable tout en permettant d'assurer une communication entre le personnel et son environnement, tant avec l'extérieur du lieu d'intervention qu'à l'intérieur de celui-ci.

Le système selon l'invention comprend au moins trois ensembles comprenant une station radio de base de type BTS (pour Base Transceiver Station) et un récepteur RNSS (pour Radio Navigation Satellite System) connecté à ladite station. Dans un exemple de réalisation, le récepteur est du type GPS (Global Positioning System), GLONASS ou GALILEO qui permet, par communication satellitaire, de connaître la position de la station radio de base dans un référentiel donné par synchronisation et localisation.

Chacun des ensembles est solidarisé à respectivement un véhicule d'intervention, de sorte que la localisation des véhicules et donc celles des stations radio de base soit connue en temps réel. En outre, chacune des stations est aptes à émettre un signal représentatif de sa position synchronisée.

Par conséquent, les véhicules d'intervention pour le système de localisation sont équipés avec un ensemble comprenant une station radio de base du type BTS et un récepteur RNSS connecté à ladite station de sorte à assurer sa localisation et sa synchronisation en temps réel.

Le système de localisation comprend également un dispositif de communication portable par le personnel, tel qu'un téléphone mobile GSM (pour Global System for Mobile communications). De façon connue, le téléphone et chacune des stations sont aptes à communiquer entre eux de sorte à émettre un signal de distance respectivement entre ledit téléphone et chacune des stations de base.

Le système de localisation permet donc de créer un réseau sans fil (Wifi) de façon circonstancielle et autonome, ledit réseau étant mobile car porté par les véhicules d'intervention et localisé dans un référentiel connu au moyen des récepteurs.

Dans le cas où au moins l'un des véhicule d'intervention comprend une échelle, une amélioration de la fiabilité du réseau sans fil peut être obtenue en solidarisant la station radio de base au voisinage de la partie supérieure de ladite échelle, de sorte à bénéficier d'un effet d'antenne lorsque ladite échelle est déployée.

Pour permettre la localisation géographique du personnel dans le réseau sans fil, le système comprend un serveur de localisation qui est agencé pour recevoir les signaux de position et de distance. De façon avantageuse, le serveur est prévu dans le poste de contrôle de l'intervention.

Le serveur de localisation est apte à assurer en temps réel la localisation dudit dispositif par triangulation au moyen des signaux reçus. Selon une réalisation, le réseau Wifi comprend quatre ensembles station radio de base - récepteur qui sont portés par respectivement quatre véhicules, de sorte à assurer la triangulation du téléphone portable dans ledit réseau avec quatre signaux de positon et de distance.

En outre, le réseau Wifi permet de fiabiliser, au voisinage du lieu d'intervention, la communication au moyen des téléphones portables, et ce quelque soit l'état ou la disponibilité des réseaux installés à demeure.

Selon une réalisation, le serveur comprend des moyens aptes à émettre un signal de localisation du personnel, le dispositif de communication étant apte à recevoir ledit signal et comprenant des moyens de visualisation de ladite localisation. Ainsi, le personnel engagé dans l'intervention peut bénéficier de sa position en temps réel dans le bâtiment.

En outre, pour mieux représenter la localisation du personnel, on peut prévoir que le serveur comprenne des moyens de cartographie du lieu d'intervention, de sorte à émettre un signal de localisation relativement à ladite cartographie.

Selon une réalisation, le serveur comprend des moyens de visualisation de la localisation du personnel, et des moyens de communication avec le dispositif de communication pour assister le déplacement du personnel.

On décrit ci-dessous un procédé de localisation de personnel à l'intérieur d'un lieu d'intervention, ledit procédé prévoyant d'équiper au moins trois véhicules d'intervention avec un ensemble comprenant une station radio de base de type BTS et un récepteur RNSS connecté à ladite station.

Les véhicules d'intervention sont positionnés à proximité du lieu d'intervention de sorte à créer le réseau Wifi mobile et circonstanciel tel que décrit ci-dessus.

Dans le procédé de localisation, en temps réel :
- chaque station de base est localisée et synchronisée au moyen du récepteur qui lui est connecté ;
- un signal de position synchronisée de chacune des stations radio de base est émis vers un serveur de localisation ;
- des signaux de distance séparant un dispositif de communication porté par le personnel et respectivement chacune des stations de base sont mesurés et émis vers le serveur de localisation ;
- le serveur calcule la localisation du personnel par triangulation au moyen des signaux de position synchronisée et des signaux de distance.

En particulier, le procédé de localisation selon l'invention ne présente pas de contraintes de positionnement d'un véhicule par rapport à un autre ni par rapport au lieu d'intervention, sauf les contraintes grossières pour obtenir un réseau sans fil autour du lieu d'intervention.

En outre, compte tenu de sa réalisation en temps réel, le procédé de localisation prévoit les éventuels déplacements d'au moins un véhicule pendant l'intervention, sans altérer la fiabilité de la localisation, puisque celle-ci obtenue de façon dynamique.

Enfin, le procédé peut prévoir de communiquer la localisation au dispositif de communication et/ou d'assister le déplacement du personnel, éventuellement en relation avec la localisation d'autres personnels, en fonction de la localisation calculée.

## Revendications

1. Système de localisation de personnel à l'intérieur d'un lieu d'intervention, ledit système comprenant au moins trois véhicules d'intervention et au moins trois ensembles comprenant une station radio de base de type BTS et un récepteur RNSS connecté à ladite station, un ensemble étant solidarisé à respectivement un véhicule de sorte à assurer la synchronisation et la localisation de chacune des stations de base au moyen du récepteur, chacune desdites stations étant aptes à émettre un signal de position synchronisée, ledit système comprenant en outre un dispositif de communication portable par le personnel, ledit dispositif et chacune desdites stations étant aptes à communiquer entre eux de sorte à émettre un signal de distance respectivement entre le dispositif de communication et chacune des stations de base, ledit système comprenant un serveur de localisation qui est agencé pour recevoir les signaux de position et de distance, ledit serveur étant apte à assurer en temps réel la localisation dudit dispositif par triangulation au moyen desdits signaux reçus.

2. Système de localisation selon la revendication 1, **caractérisé en ce qu'**il comprend quatre véhicules et quatre ensembles station radio de base - récepteur.

3. Système de localisation selon la revendication 1 ou 2, **caractérisé en ce que** le serveur comprend des moyens aptes à émettre un signal de localisation du personnel, le dispositif de communication étant apte à recevoir ledit signal et comprenant des moyens de visualisation de ladite localisation.

4. Système de localisation selon la revendication 3, **caractérisé en ce que** le serveur comprend des moyens de cartographie du lieu d'intervention, de sorte à émettre un signal de localisation relativement à ladite cartographie.

5. Système de localisation selon l'une quelconque des revendications 1 à 4, **caractérisé en ce que** le serveur comprend des moyens de visualisation de la localisation du personnel, et des moyens de communication avec le dispositif de communication pour assister le déplacement du personnel.

6. Procédé de localisation de personnel à l'intérieur d'un lieu d'intervention, ledit procédé prévoyant d'équiper au moins trois véhicules d'intervention avec un ensemble comprenant une station radio de base de type BTS et un récepteur RNSS connecté à ladite station, lesdits véhicules étant positionnés à proximité du lieu d'intervention, dans lequel, en temps réel :
- chaque station de base est localisée et synchronisée au moyen du récepteur qui lui est connecté ;
- un signal de position synchronisée de chacune des stations radio de base est émis vers un serveur de localisation ;
- des signaux de distance séparant un dispositif de communication porté par le personnel et respectivement chacune des stations de base sont mesurés et émis vers le serveur de localisation ;
- le serveur calcule la localisation du personnel par triangulation au moyen des signaux de position synchronisée et des signaux de distance.

7. Procédé de localisation selon la revendication 6, **caractérisé en ce qu'**il prévoit de communiquer la localisation au dispositif de communication.

8. Procédé de localisation selon la revendication 6 ou 7, **caractérisé en ce qu'**il prévoit d'assister le déplacement du personnel, éventuellement en relation avec la localisation d'autres personnels, en fonction de la localisation calculée.

9. Véhicule d'intervention pour un système de localisation selon l'une quelconque des revendications 1 à 5, ledit véhicule étant équipé avec un ensemble comprenant une station radio de base du type BTS et un récepteur RNSS connecté à ladite station de sorte à assurer sa localisation et sa synchronisation en temps réel.

10. Véhicule d'intervention selon la revendication 9, **caractérisé en ce qu'**il comprend une échelle, la station radio de base étant solidarisée au voisinage de la partie supérieure de ladite échelle.
